# EUROPEAN PATENT APPLICATION

(11) **EP 4 644 078 A1**
(43) Date of publication of application: **05.11.2025**
(21) Application number: 22851389.1
(22) Date of filing: 28.12.2022
(51) Int. Cl.: B29B 17/04, B26D 1/547, B26D 7/06, B26D 7/08, B23D 61/18, B30B 3/00, B29K 105/08

(54) **PORTABLE MACHINE FOR CUTTING PIECES OF COMPOSITE MATERIAL**

(71) Applicant: Acciona Construcción S.A., 28108 Alcobendas (Madrid) (ES)
(72) Inventor: MARTÍNEZ BARRIGÜETE, Eva, 28108 Alcobendas (Madrid) (ES); PRIMI, Stefano, 28108 Alcobendas (Madrid) (ES); SÁNCHEZ HERNÁNDEZ, Mónica, 28108 Alcobendas (Madrid) (ES); GÁLVEZ MORENO, Araceli, 28108 Alcobendas (Madrid) (ES); QUILES DÍAZ, Susana, 28108 Alcobendas (Madrid) (ES)
(74) Representative: Pons IP
(86) International application number: PCT/ES2022/070841
(87) International publication number: WO 2024/141678

(57) **Abstract**

The invention relates to a portable machine (1) for cutting pieces of composite material, comprising a compression module (2) which comprises one or more top rollers (4) and two or more bottom rollers (6), wherein the top rollers (4) are coupled to a mechanism configured to vertically move said top rollers (4), thereby compressing the pieces to be cut, wherein at least one top roller (4) is vertically offset with respect to a bottom roller (6) adjacent to the same, the offset angle (α) being comprised between 45° ± 15°, in such a way that the piece of composite material is compressed by the rollers (4, 6) in a direction that is substantially perpendicular to the direction of the fibres, fracturing, delaminating and breaking the same before the cut is made in a diamond wire cutting module (7).

## Description

### OBJECT OF THE INVENTION

The present invention can be included within the technical field of portable devices and machines for cutting composite materials, particularly machines of the type that comprise a compression module to compress and break the fibres of said materials, and a subsequent cutting module. More specifically, the object of the present invention relates to a portable machine for recycling composite materials, such as for wind turbine blades, which has a configuration of rollers that allow for a delamination of the pieces by breaking and fracturing the fibres, substantially compressing in the direction of the same, which is especially advantageous for the subsequent cutting thereof within the same machine and for the subsequent recycling thereof, especially if said cutting is done by means of a diamond wire, since the combination allows very thick pieces of any type of composite material to be cut.

### BACKGROUND OF THE INVENTION

Given the increase in the use of composite materials for making large structures, one advantage is the use thereof in making monolithic pieces, thereby making the most of the advantages related to the same. These pieces, once the useful life thereof is over, must be transferred to recycling plants, and this must be done with the lowest possible environmental impact.

In order to dismantle large pieces of composite material for the transfer thereof to recycling plants, it is necessary to cut said pieces to dimensions that can be easily transported by conventional means. This allows the pieces to be transferred in a way that optimises transport resources, thereby implying lower CO₂ emissions during transport.

Some portable machines for cutting pieces of composite materials are known in the state of the art.

For example, document ES2394704A1 describes a portable guillotine-type cutting machine. Guillotine cutting does not allow all types of composite materials, or all thicknesses, to be cut. In addition, said document describes a compression step using rollers that are symmetrically arranged in rows, the result of which is not satisfactory for delamination, since the roller configuration described does not allow the fibres to be fractured and broken, all of which affects the final result of the cut, implying significant limitations. It has been found that this step of compression with symmetrically arranged rollers, one on top of the other, does not to allow for a delamination of the material, meaning it does not allow the different fibre layers that make up the composite material to be broken.

Likewise, known machines for cutting composite materials produce a large amount of dust and solid particles that are harmful to the operator and pollute the surrounding area, for example a wind farm. There are no known solutions that make it possible to decant and reduce the amount of dust particles emitted that not only pollute, but can also affect the health of cutting machine operators.

### DESCRIPTION OF THE INVENTION

The present invention aims to solve some of the problems mentioned in the state of the art. More particularly, the present invention relates to a portable machine for cutting pieces of composite materials, comprising at least one compression module and one cutting module.

The compression module comprises a row provided with one or more top rollers and a bottom row provided with two or more bottom rollers, said rollers coupled to an actuator that is operatively coupled to a mechanism configured to vertically move said rollers,, thereby, during operation, compressing the pieces intended to be cut and, further configured to rotate said rollers, so that during operation, the piece of composite material is moved tangentially to said rollers until reaching the cutting module.

Preferably, at least one top roller is vertically offset with respect to a bottom roller adjacent to the same, the offset angle being comprised between 45° ± 15°, such that the piece of composite material is compressed by the rollers in a direction that is substantially perpendicular to the direction of the fibres, fracturing and breaking them before the cut is made in the cutting module. In this way, the rollers exert a pressure against the interlaminar area of the pieces.

The compression module may comprise, for example, two top rollers in the top row and three bottom rollers in the bottom row, each of the rollers being vertically offset at an angle of 45 ± 10° with respect to the bottom rollers immediately adjacent to the same.

Likewise, the compression module can comprise multiple rollers forming different compression stations made up of triangles of rollers arranged at different distances from each other (different openings), with a cascading-type configuration, going from a larger opening to a smaller opening. **In** this way, a large piece is successively fractured and broken, thereby allowing it to move to roller stations provided with smaller openings. In this embodiment, the stations with the largest opening at the entrance of the machine have the sole objective of compressing the large pieces to the size that can be admitted by the main offset rollers, and therefore these compression stations at the entrance can have rollers arranged symmetrically one above the other, since the elimination is achieved later in successive stations provided with rollers offset from each other at 45 ± 10°.

According to the present invention, at least one or each one of the top rollers is arranged at 45 ± 10° with respect to one immediately below it in order to compress in the direction of the fibres, but the number of rollers and/or stations determined by triangles of rollers will be defined by the design of the machine based on the type, size and thickness of the pieces to be cut.

**In** an advantageous embodiment, each top roller is offset at a 60° angle from two bottom rollers adjacent to the same, the compression module thus having a staggered configuration of rollers, forming groups of equilateral triangles.

Likewise, in a preferred embodiment, the surface of the top rollers is smooth, but surface of the bottom rollers has inclined or spiral protuberances, to favour the gripping of the piece to be cut.

Preferably, the protuberances have a frustopyramidal cross section and are shifted by about 30° with respect to the longitudinal axis.

The solutions described above facilitate the delamination of the material (breaking the different fibre layers that make up the composite material) since they exert a force against the interlaminar area. On the other hand, in some composite materials there are cores of other types of material, such as wood or foam, and these cores are detached from the composite material as it passes through the configuration of rollers described above. These two functions, detachment and delamination, are as essential as the cut itself, since they allow for a better compression of the material (increasing the amount of material that can be transported in a truck) and, consequently, facilitate a better recycling of the composite material.

After the compression module, and once the pieces of composite material have been delaminated in the compression module by breaking and fracturing the fibres, the pieces are moved by the rotation of the traction rollers to a cutting module arranged after the compression module.

The cutting module comprises a cutting element which, according to a preferred embodiment of the present invention, is made up of a diamond wire. Preferably, the diamond wire is coupled to two pulleys, one of which is a tractor pulley, in such a way that said diamond wire is configured to vertically descend and cut the piece of composite material.

The diamond wire cutting solution, along with the roller configuration described above, allows any composite material (fibreglass, carbon or aramid) and any thickness to be cut, unlike other known systems.

**In** addition, the cutting module can be provided with a cooling and cleaning water dispenser, configured to cool and clean the diamond wire as it cuts the piece of composite material.

**In** order to reduce the contamination of dust particles and to reuse the cooling and cleaning water in a closed circuit, the machine can also have a module for cleaning, recycling the water and decanting solid particles, which, in turn, comprises:
- a tank arranged in a lower portion, configured to store the cooling and cleaning water and to decant solid particles resulting from the cut in the water stored in the same,
- a filter for filtering fine particles, fed by the water stored inside the tank,
- pumping elements configured to pump the filtered water to the water dispenser to be reused.

In a preferred embodiment, the water diffusers are configured to create an atmosphere of water particles along the entire length of the cut, which allows the dust particles to precipitate along with the water.

Preferably, the machine comprises, on the one hand, a first group of diffusers or nebulisers that neutralise the dust emissions emitted by the cutting. On the other hand, another group of diffusers comprised in the module acts directly on the cutting zone, thereby preventing the emission of a significant part of the dust from the cutting zone. It is noteworthy to mention that this water is not lost, since it enters the closed circuit for recirculating and cleaning the water.

Lastly, in a preferred embodiment, the cutting machine comprises two beds, one front bed and one rear bed, both retractable and collapsible, to support the piece to be cut at an entry portion prior and adjacent to the compression module, and at an exit portion at the rear and adjacent to the cutting module.

A second aspect of the invention relates to a vehicle that comprises the cutting machine in any of the variants or embodiments described above. The vehicle is taken to the nearest location to where the cut is to be made, for example at a wind farm, and the material is then transported to a recycling plant. This allows the pieces to be transferred in a way that optimises transport resources, thereby implying lower CO₂ emissions during transport.

Another environmental objective is for the cuts to be made without emitting particles into the atmosphere so that it can be used in any environment. Given the variety of possible locations of the piece to be cut, as well as the characteristics of the dust that may be emitted, the cleaning, water recycling and solid particle decanting module described above is essential to achieving the aforementioned objective.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1 shows a perspective view of a preferred embodiment of the cutting machine, illustrating the front retractable bed, the compression module, the diamond wire cutting module, the tank for recirculating cooling water and the rear retractable bed.
Figure 2 shows a schematic front view of the preferred embodiment of figure 1.
Figure 3 shows a schematic front view of a preferred embodiment of the compression module, illustrating a staggered configuration of rollers and the optimum offset angle range for delamination, according to the present invention.

### PREFERRED EMBODIMENT OF THE INVENTION

A detailed description of a preferred exemplary embodiment of the object of the invention is provided below, with the aid of the attached figures described above.

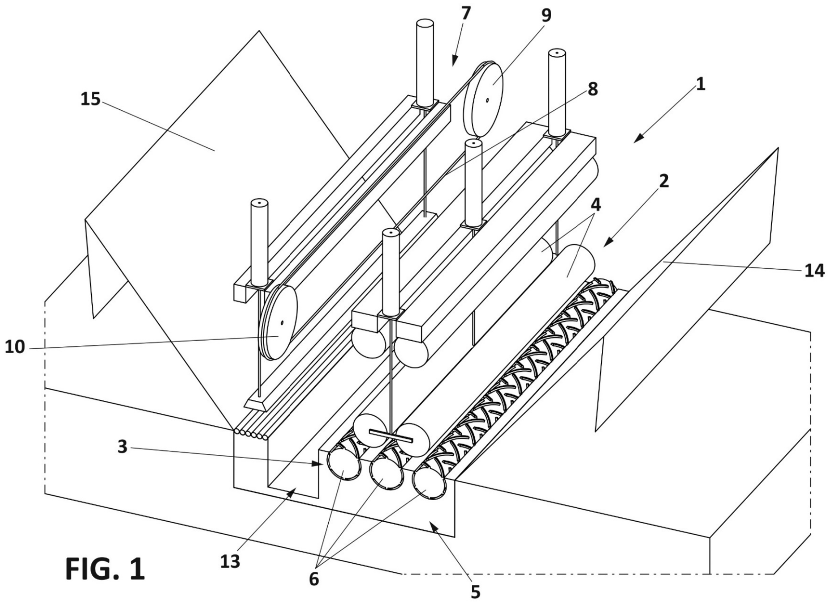

As shown in figure 1, the object of the invention relates to portable machine (1) for cutting pieces of composite material, comprising a compression module (2) and a cutting module (7), wherein it comprises a top row (3) provided with one or more top rollers (4) and a bottom row (5) provided with two or more bottom rollers (6), said rollers (4) coupled to an actuator operatively coupled to a mechanism configured to vertically move said rollers (4), thereby compressing the pieces intended to be cut and, furthermore, configured to rotate said rollers (4, 6), such that, during operation, the piece of composite material is moved tangentially to said rollers (4, 6), wherein at least one top roller (4) is vertically offset with respect to a bottom roller (6) adjacent to the same, the offset angle (α) being comprised between 45° ± 15°, in such a way that the piece of composite material is compressed by the rollers (4, 6) in a direction that is substantially perpendicular to the direction of the fibres, fracturing and breaking them before the cut is made in the cutting module (7).

More specifically, in the preferred embodiment illustrated by figure 1, each top roller (4) is offset at a 60° angle (α) from two bottom rollers (6) adjacent to the same, the compression module (2) thus having a staggered configuration of rollers (4, 6), forming groups of equilateral triangles.

Likewise, figure 1 shows that, in the preferred embodiment, the bottom rollers (6) comprise protuberances that are shifted from the longitudinal axis to favour the gripping of the piece intended to be cut and to prevent it from slipping.

Likewise, as a cutting element (7) the cutting module (7) comprises a diamond wire coupled to two pulleys (9, 10), one of these pulleys (9, 10) being a tractor pulley, in such a way that said diamond wire is configured to vertically descend and cut the piece of composite material.

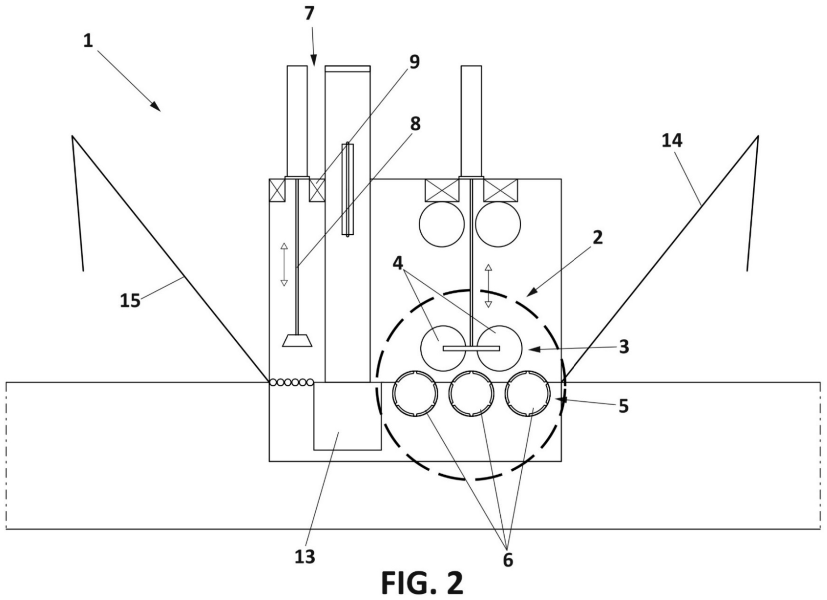

Figure 2 shows a schematic front view of the preferred embodiment of figure 1, wherein the aforementioned cutting machine is illustrated. As can be seen in figure 2, the cutting machine (1) further comprises two beds (14, 15), a front bed (14) and a rear bed (15), both retractable, to support the piece at an entry portion prior and adjacent to the compression module (2), and at an exit portion at the rear and adjacent to the cutting module (7).

Furthermore, to control dust emissions, the machine comprises water diffusers (not shown) along the entire length of the diamond wire, and a tank (13) that functions as a solid particle decanter. This water passes through a fine filtering system and is recovered to be pumped back to the water dispersion system, which shoots water at the piece and the diamond wire.

Preferably, the cutting machine (1) comprises, on the one hand, a first group of diffusers or nebulisers (not shown) which neutralise the dust emissions emitted by the cutting. On the other hand, another group of diffusers comprised in the module acts directly on the cutting zone, thereby preventing the emission of a significant part of the dust from the cutting zone. **It** is noteworthy to mention that this water is not lost, since it enters the closed circuit for recirculating and cleaning the water.

**In** the preferred embodiment, the cutting machine (1) comprises curtains between the different sections to prevent both water and dust from passing to other parts of the cutting machine (1).

The assembly is designed to be autonomous, and thus may have a generator to supply the necessary energy to power all of the elements described in the operation thereof.

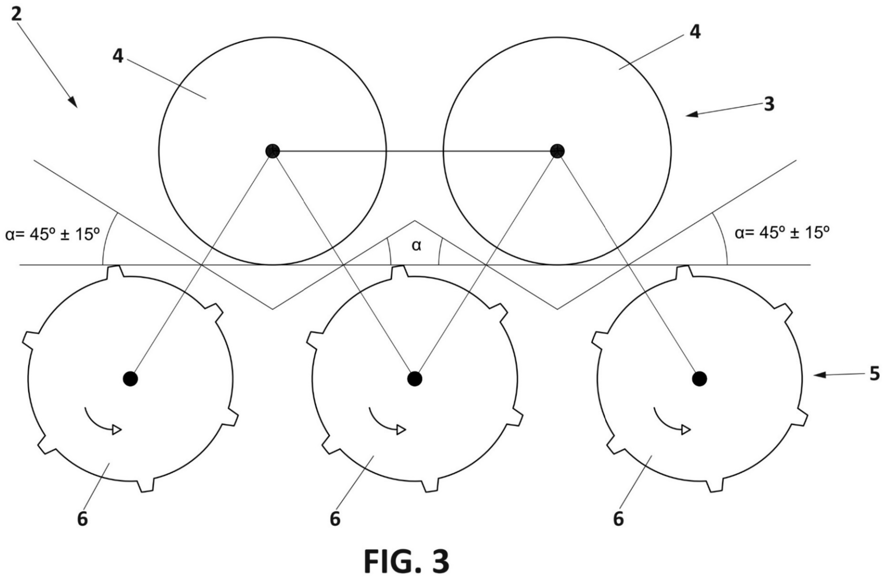

Figure 3 shows a schematic front view of a preferred embodiment of the compression module (2), illustrating a staggered configuration of rollers (4, 6) arranged offset from each other at a 60° angle, wherein each group of three rollers (4, 6) forms an equilateral triangle.

Likewise, figure 3 represents the offset angle between the rollers and shows the configuration of the rollers and the optimal offset range for producing the optimum delamination and breakage of the internal fibres, which is, specifically, 45 ± 10°, according to the present invention.

## Claims

1. A portable machine (1) for cutting pieces of composite material, comprising:
- a compression module (2) comprising a top row (3) provided with one or more top rollers (4) and a bottom row (5) provided with two or more bottom rollers (6), wherein the top rollers (4) are coupled to an actuator operatively coupled to a mechanism configured to vertically move said top rollers (4), thereby compressing the pieces intended to be cut, and furthermore configured to rotate said rollers (4, 6), so that, in operation, the piece of composite material is moved tangentially to said rollers (4, 6),
- a cutting module (7) arranged after the compression module (2), comprising at least one cutting element (8) configured to cut the piece of composite material once it has been compressed in the compression module (2),
said portable machine (1) **characterised in that** at least one top roller (4) is vertically offset with respect to a bottom roller (6) adjacent to the same, the offset angle (α) being comprised between 45° ± 15°, such that the piece of composite material is compressed by the rollers (4, 6) in a direction that is substantially perpendicular to the direction of the fibres, fracturing and breaking them before the cut is made in the cutting module (7).

2. The cutting machine of claim 1, wherein at least one top roller (4) is offset at a 60° angle (α) with respect to two bottom rollers (6).

3. The cutting machine of claim 1, wherein each top roller (4) is offset at a 60° angle (α) with respect to two bottom rollers (6) adjacent to the same, the compression module (2) thus having a staggered configuration of rollers (4, 6), forming groups of equilateral triangles.

4. The cutting machine of any one of the preceding claims, wherein one or more of the bottom rollers (6) has protuberances inclined with respect to the longitudinal axis in order to favour the gripping of the pieces of composite material.

5. The cutting machine of claim 1, wherein the compression module (2) comprises two top rollers (4) in the top row (3) and three bottom rollers (6) in the bottom row (4), each of the rollers being vertically offset at an angle (α) of 45 ± 10° with respect to the two bottom rollers (6) that are immediately adjacent to them.

6. The portable machine of claim 1, wherein the cutting element (7) of the cutting module (8) is a diamond wire coupled to two pulleys (9, 10), one of these pulleys (9, 10) being a tractor pulley, in such a way that said diamond wire is configured to vertically descend and cut the piece of composite material.

7. The portable machine of claim 4, wherein the cutting module (7) further comprises a cooling and cleaning water dispenser, configured to cool and clean the diamond wire throughout the entire cutting section as it cuts the piece of composite material.

8. The portable machine of claim 5, which further comprises a cleaning, water recycling and solid particle decanting module (12), which in turn comprises:
- a tank (13) arranged in a lower portion, configured to store the cooling and cleaning water, and to decant solid particles resulting from the cut in the water stored in the same,
- a filter for filtering fine particles, fed by the water stored inside the tank,
- pumping elements configured to pump the filtered water to the water dispenser in order to be reused.

9. The portable machine of claim 1, which comprises two beds (14, 15), one front bed and one rear bed, both retractable, to support the piece at an entry portion prior and adjacent to the compression module (2), and at an exit portion at the rear and adjacent to the cutting module (7).
